# EUROPÄISCHE PATENTSCHRIFT

(11) **EP 1 539 546 B1**
(45) Veröffentlichungstag und Bekanntmachung des Hinweises auf die Patenterteilung: **08.11.2006**
(21) Anmeldenummer: 03717142.8
(22) Anmeldetag: 13.03.2003
(51) Int. Cl.: B60S 1/04

(54) **LAGERUNG FÜR WISCHERANTRIEBE**
BEARING FOR WIPER DRIVES
LOGEMENT DE MECANISMES D'ENTRAINEMENT D'ESSUIE-GLACES

(30) Priorität: 12.09.2002 DE 10242298
(43) Veröffentlichungstag der Anmeldung: 15.06.2005
(73) Patentinhaber: ROBERT BOSCH GMBH, 70442 Stuttgart (DE)
(72) Erfinder: MOOSMANN, Johannes, 77830 Buehlertal (DE); FLEISCHER, Claus, 77815 Buehl (DE); WEGNER, Norbert, 77815 Buehl (DE); WEIGOLD, Thomas, 76532 Baden-Baden (DE); ZIMMER, Joachim, 77880 Sasbach (DE)
(86) Internationale Anmeldenummer: PCT/DE2003/000798
(87) Internationale Veröffentlichungsnummer: WO 2004/026642

(56) Entgegenhaltungen:
- DE-A- 4 036 367
- DE-A- 19 963 918
- US-A- 5 621 942
- US-A- 5 683 215
- PATENT ABSTRACTS OF JAPAN vol. 009, no. 168 (M-396), 13. Juli 1985 (1985-07-13) -& JP 60 042121 A (NISSAN JIDOSHA KK), 6. März 1985 (1985-03-06)

## Beschreibung

### Technisches Gebiet

Die Erfindung bezieht sich auf eine Lagerung für Wischerantriebe von Schreibenwischanlagen, insbesondere zur Reinigung von Front- und Heckscheiben von Fahrzeugen. Die Scheibenwischanlagen umfassen Elektromotoren, die ein gleichmäßig übersetzendes Getriebe antreiben, dem ein ungleichmäßig übersetzendes Getriebe z.B. eine Kurbelschwinge oder dergleichen als Kopplungselement zu einem Wischarm oder einem Wischhebel nachgeordnet sein kann. Der Elektromotor und das gleichmäßig übersetzende Getriebe werden mittels eines Druckguss- oder eines Blech-Biegeteils mit der Karosserie eines Fahrzeugs verbunden.

### Stand der Technik

JP 60 042 121 A offenbart die im Oberbegriff des Anspruchs 1 genannten Merkmale. DE 196 42 666 A1 hat eine Lagerung von Antriebswellen einer Scheibenwischanlage zum Gegenstand. Eine Wischanlage umfasst eine Rohrplatine, die zur Lagerung von Antriebswellen mindestens ein rohrförmiges Element aufweist. In dieses rohrförmige Element ist eine Lagerbuchse eingebaut. Die Lagerbuchse ist gegenüber dem rohrförmigen Element formschlüssig fixiert. Die Lagerbuchse weist mindestens einen Bund auf. Das rohrförmige Element umfasst eine von der Kreisform abweichende, insbesondere polygonförmige oder unrunde Innenkontur auf, während die Lagerbuchse eine zu dieser passende Außenkontur aufweist. Die Kontur zwischen der Lagerbuchse und dem rohrförmigen Element kann auch in axialer Richtung konisch verlaufend ausgebildet werden.

DE 197 12 113 A1 bezieht sich auf die Lagerung eines Wischerantriebs. Eine Wischanlage für ein Fahrzeug umfasst einen Wischermotor und ein Getriebe, das mit an seinem Gehäuse angeformten Befestigungsbereichen über eine Aufnahme an einem rohrförmigen Träger befestigt ist. Die Aufnahme umfasst den rohrförmigen Träger formschlüssig und/oder kraftschlüssig. Der rohrförmige Träger weist in Umfangsrichtung eine unrunde Form und/oder in Längsrichtung eine sich verändernde Kontur, Abmessung oder Ausrichtung auf. Die Aufnahme stellt ein recht komplexes Bauteil dar und ist vollständig oder teilweise an das Getriebegehäuse angeformt.

Ein Wischerantrieb, der mit Hilfe einer Montageplatte an einer Türabdeckung befestigt ist, ist aus JP-A 60-042121 bekannt. Hierbei besteht die Montageplatte aus zwei Metallblechen, zwischen denen ein Harz aufgenommen ist. Zur Befestigung der Montageplatte an der Türabdeckung ist diese in einer ringförmigen Nut eines Befestigungselements aufgenommen. Das Befestigungselement ist mit Hilfe eines Befestigungsclips an der Türabdeckung befestigt.

### Darstellung der Erfindung

Mit der erfindungsgemäß vorgeschlagenen Lösung lässt sich eine standardisiert ausführbare Anbindung eines Wischerantriebs an eine Fahrzeugkarosserie erreichen. Dazu sind im Wischerantrieb, der einen Antriebsmotor und ein Getriebe umfasst, entweder im Gehäuse des Antriebsmotors oder am Getriebegehäuse Anbindungsstellen vorgesehen, die nicht direkt mit dem Antriebsmotor oder dem Getriebe verbunden sind, sondern über Entkopplungselemente am Antriebsmotor bzw. am Getriebe angeordnet sind.

Die mit Entkopplungselementen versehenen Anbindungsstellen können sowohl unmittelbar mit der Fahrzeugkarosserie unterhalb der Windschutzscheibe oder unterhalb einer steiler stehenden Heckscheibe mit der Fahrzeugkarosserie verbunden werden. Ferner ist die Aufnahme des Wischerantriebs, den Antriebsmotor und das Getriebe umfassend, an einem Halteblech über die mit Entkopplungselementen versehenen Anbindungsstellen des Wischerantriebs möglich.

Bei der unmittelbaren Anbindung des Wischerantriebs an der Karosserie eines Fahrzeugs kann dort bereits eine Anschraubfläche mit einem dem zur Aufnahme des Wischerantriebs geeigneten Lochbild bereitgestellt werden. Damit kann ein separates Befestigungselement entfallen. Bei der Befestigung des Wischerantriebs an einem Halteblech, welches mit der Karosserie eines Fahrzeugs verbunden ist, dient das Halteblech als Halterung für den Wischerantrieb. Das Halteblech kann in vorteilhafter Weise an die Geometrie des zur Aufnahme des Wischerantriebs erforderlichen Einbauraum angepasst werden und weist ein zur Aufnahme des Wischerantriebs geeignetes Lochbild auf. An dem Halteblech für den Wischerantrieb sind keine separat vorzuhaltenden Entkopplungselemente erforderlich. Die Entkopplung des Wischerantriebs von der Fahrzeugkarosserie hinsichtlich der Übertragung von Geräuschen und Schwingungen, die vom Wischermotor bzw. vom Getriebe ausgehen, erfolgt über die am Wischerantrieb - sei es am Gehäuse des Antriebsmotors, sei es am Gehäuse des Getriebes - an den Anbindungsstellen zur Karosserie bzw. zum Halteblech ausgeführten mit Entkopplungselementen versehenen Anbindungsstellen.

Mit der erfindungsgemäß vorgeschlagenen Lösung ist die Standardisierung der Anbindung eines Wischerantriebs an eine Fahrzeugkarosserie möglich. Darüber hinaus lässt sich durch die erfindungsgemäß vorgeschlagene Lösung die Typenvielfalt hinsichtlich der vorzuhaltenden Entkopplungselemente erheblich reduzieren. Der Rückgriff auf bereits eingesetzte und bewährte Entkopplungselemente ist einfacher und presiwerter. Durch den Wegfall einer Motorhalterung gemäß der ersten der oben genannten Einbauvarianten lässt sich eine Teilereduktion eines Wischsystems erreichen. Darüber hinaus ist der Fügeprozess des Wischerantriebs bei der Wandmontage bei Fahrzeugherstellern wesentlich vereinfacht. Der Wischermotor kann durch den Werker mit einer Hand ergriffen werden, während dieser mit der zweiten Hand von oben den Wischerantrieb an der Anschraubfläche bzw. am Halteblech mit einem geeigneten Standardwerkzeug verschraubt. Darüber hinaus können hinsichtlich der Montage der erfindungsgemäß ausgebildeten Wischerantriebe die Entkopplungselemente und die Befestigungselemente wie z.B. Gewindebuchsen schon während der Montage mit dem Wischergehäuse bzw. dem Getriebegehäuse des Wischerantriebs verbunden werden. Damit lässt sich die Vielfalt hinsichtlich vorzuhaltender Einzelteile, die bei der Montage des Wischerantriebs erforderlich sind, erheblich reduzieren.

Ein weiteres Merkmal des erfindungsgemäß vorgeschlagenen Wischerantriebs besteht darin, den Wischerantriebsmotor über zwei Entkopplungselemente, die am Getriebegehäuse des dem Wischerantriebsmotor zugeordneten Getriebes und am Poltopfende des Wischerantriebsmotors befestigt sind, mit der Fahrzeugkarosserie zu verbinden. Das am Poltopfende des Wischantriebsmotors vorgesehene Entkopplungselement kann wahlweise unmittelbar in die Fahrzeugkarosserie integriert sein oder an einer Motorhalterung angeordnet werden. Dieses Merkmal des erfindungsgemäß vorgeschlagenen Wischerantriebs bietet den Vorteil, dass die Verbindung des Wischerantriebs, einen Wischerantriebsmotor und ein Getriebe umfassend, an seinen Aufnahmen an der Fahrzeugkarosserie möglichst weit entfernt von der Abtriebswelle des Getriebes befestigt werden kann, so dass der Wischerantrieb höhere Kräfte bzw. beim Wischen einer Front- oder einer Heckscheibe auftretende Drehmomente aufnehmen kann. Der erfindungsgemäß vorgeschlagene Wischerantrieb eignet sich zur Verwirklichung eines Wischerdirektantriebs (WDA), bei dem ein ungleichmäßig übersetzendes Getriebe entfällt und der Aufbau des Wischsystems einen Antriebsmotor, ein diesem zugeordnetes gleichmäßig übersetzendes Getriebe (Komponenten des Wischerantriebs) und - unter Verzicht auf ein Wischergestänge - einen Wischarm aufweist. Mit der Abtriebswelle des gleichmäßig übersetzenden Getriebes kann die den Wischarm aufnehmende Welle unmittelbar angetrieben werden. Darüber hinaus können dem Wischerantriebsmotor des Wischerantriebs eine Umsteuerelektronik zum Reversieren des Wischerantriebsmotors bei Erreichen seiner Endlagen zugeordnet sein, ferner eine Lagesensorik.

### Zeichnung

Anhand der Zeichnung wird die Erfindung nachstehend näher erläutert.

Es zeigt:
- Figur 1: eine Wischanlage mit einem an einer individuell konfigurierten Halterung aufgenommenen Wischerantrieb mit einem Wischhebelgestänge,
- Figur 2a: eine Ansicht eines Wischerdirektantriebs gemäß einer Ausführungsvariante der vorliegenden Erfindung,
- Figur 2b: eine Draufsicht auf die Ausführungsvariante eines Wischerdirektantriebs gemäß Figur 2a,
- Figur 3: ein an einem karosserieseitig vorgesehenen Halteblech befestigter Wischerantrieb gemäß einer weiteren Ausführungsvariante der erfindungsgemäß vorgeschlagenen Lösung,
- Figur 4: die Draufsicht auf den in Figur 3 an einem Halteblech einer Fahrzeugkarosserie aufgenommenen Wischerdirektantrieb, und
- Figur 5: eine Anbindungsstelle eines Wischerantriebs, der als Wischerdirektantrieb ausgeführt ist, an einem karosserieseitig vorgesehenen Halteblech.

### Ausführungsvarianten

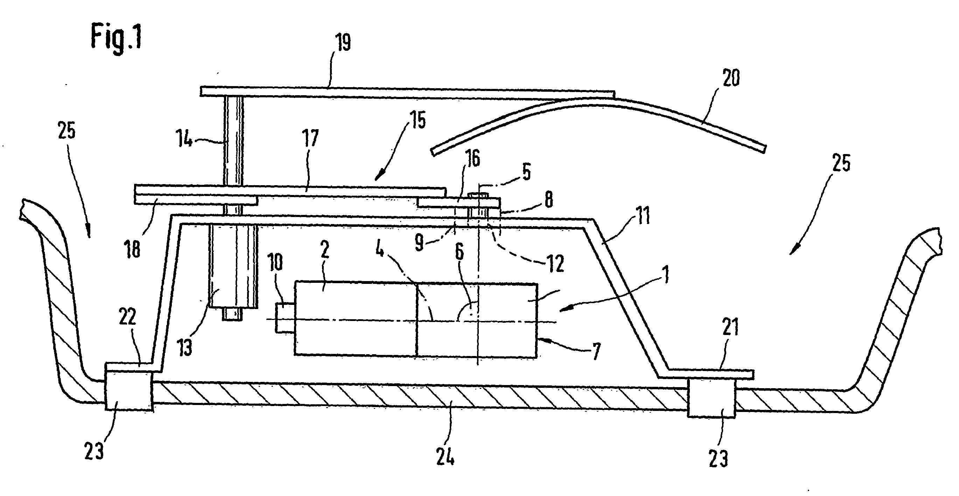

Der Darstellung gemäß Figur 1 ist eine Wischanlage entnehmbar, deren Wischantrieb an einer individuellen Motorhalterung aufgenommen ist, wobei die Wischanlage ein Wischgestänge aus Koppelelementantriebs- und -abtriebskurbel umfasst.

Ein Wischerantrieb 1 umfasst einen Wischermotor 2, dem ein gleichmäßig übersetzendes Getriebe 3 zugeordnet ist. Eine Abtriebswelle des Wischermotors 2 steht zu einer Abtriebswelle 5 des Getriebes 3 in einem rechten Winkel 6. Ein Getriebegehäuse 7 des gleichmäßig übersetzenden Getriebes 3 ist an einer ersten Verbindungsstelle 8 sowie an einer zweiten Verbindungsstelle 9 mit einer Halterung 11 verbunden, die beispielsweise als ein Blech-Biegeteil ausgebildet ist.

Der Wischermotor 2 des Wischerantriebs 1 umfasst an seinen der Abtriebswelle 4 gegenüber liegenden Ende einen Poltopf 10; die Abtriebswelle 5 des gleichmäßig übersetzenden Getriebes 3 des Wischerantriebs 1 durchsetzt eine Öffnung 12 der Halterung 11 zwischen der ersten Verbindungsstelle 8 und der zweiten Verbindungsstelle 9. Am durch die Öffnung 12 der Halterung 11 ragenden Ende der Abtriebswelle 5 des gleichmäßig übersetzenden Getriebes 3 ist in der in Figur 1 dargestellten Ausführungsvariante einer Wischanlage eine Antriebskurbel 16 ausgebildet. Die Antriebskurbel 16 ist mit einem Koppelelement 17 gelenkig verbunden, welches als Koppelstange ausgeführt ist. Die Koppelstange 17 wiederum steht mit Ihrem der Antriebskurbel 16 abgewandten Ende mit einer Abtriebskurbel 18 in Verbindung, die drehfest mit einer Wischerantriebswelle 14 verbunden ist. Die Wischerantriebswelle 14 ist in einer Lagerung 13 aufgenommen, die ihrerseits ebenfalls an der als Blech-Stanzteil ausgebildeten Halterung 11 angeflanscht ist.

In der in Figur 1 wiedergegebenen Darstellung einer Wischanlage wird die Drehbewegung der Abtriebswelle 5 des gleichmäßig übersetzenden Getriebes 3 über ein Wischergestänge 5 an die Wischerantriebswelle 15 übertragen. Die Wischerantriebswelle 14 ist drehfest mit einem Wischarm 19 verbunden, an dem ein Wischblatt 20 aufgenommen ist. Die durch das Wischblatt 20 zu reinigende Scheibe - sei es eine Windschutzscheibe, sei es eine Heckscheibe eines Fahrzeugs - ist in der Darstellung gemäß Figur 1 nicht dargestellt.

Die Halterung 11 umfasst eine erste Kröpfung 21 sowie eine weitere, zweite Kröpfung 22. Im Bereich der ersten Kröpfung 21 sowie der zweiten Kröpfung 22 der als Blech-Biegeprofil ausgebildeten Halterung 11 ist diese mit daran aufgenommener Lagerung 13 für die Wischerantriebswelle 14 und den daran aufgenommenen Wischerantrieb 1 über Aufnahmeelemente 23 mit einer Fahrzeugkarosserie 24 verbunden. In der Fahrzeugkarosserie 24 ist eine Ausnehmung 25 abgebildet, in der der Wischerantrieb 1 für eine Wischanlage unterhalb der Windschutzscheibe - durch eine Kunststoffabdeckung oder durch die geschlossene Motorhaube verdeckt - aufgenommen.

Das mit Bezugszeichen 15 bezeichnete Wischergestänge stellt ein ungleichmäßig übersetzendes Getriebe dar und dient der Realisierung einer Wischbewegung auf der Scheibe zur ungleichmäßigen Übersetzung des vom gleichmäßig übersetzenden Getriebe 3 aufgebrachten Drehbewegung. Der Abstand zwischen der Abtriebswelle 5 des Wischantriebs 1 und der Wischarmantriebswelle 14 sollte über den gesamten Wischwinkelverlauf konstant bleiben, da sonst die geforderte Wischwinkelgenauigkeit bezogen auf den Sollverlauf (Solltrajektorie) nicht eingehalten werden kann. Durch das eingesetzte als Blech-Biegeteil ausgebildete Halterungselement 11 wird eine steife Verbindung zwischen dem Wischerantrieb 1 und der Wischarmantriebswelle 14 gewährleistet.

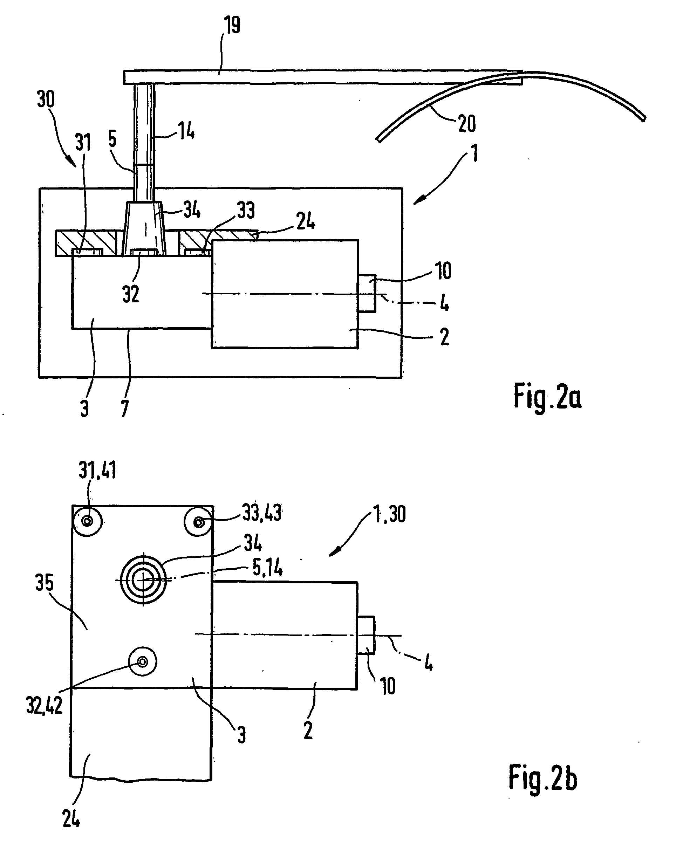

Figur 2a ist eine erste Ausführungsvariante eines erfindungsgemäß vorgeschlagenen Wischerdirektantriebs mit unmittelbarer Anbindungsmöglichkeit an eine Fahrzeugkarosserie zu entnehmen.

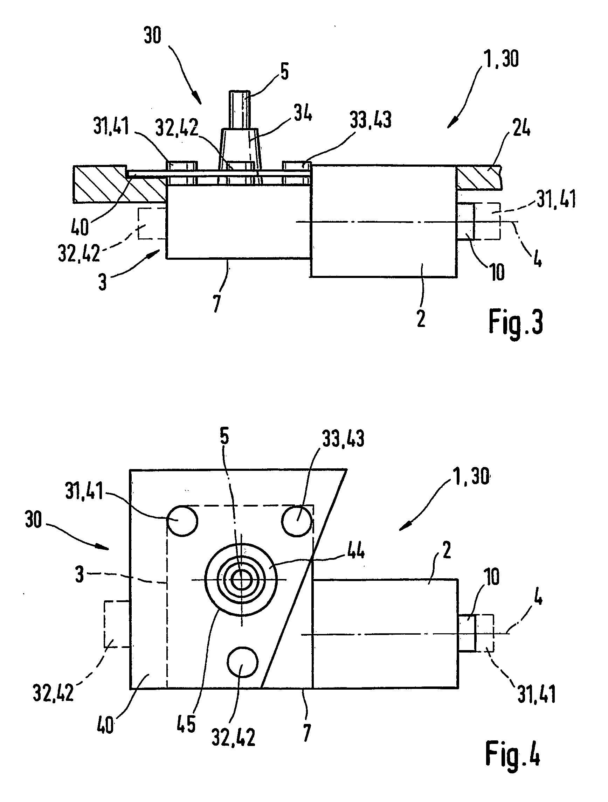

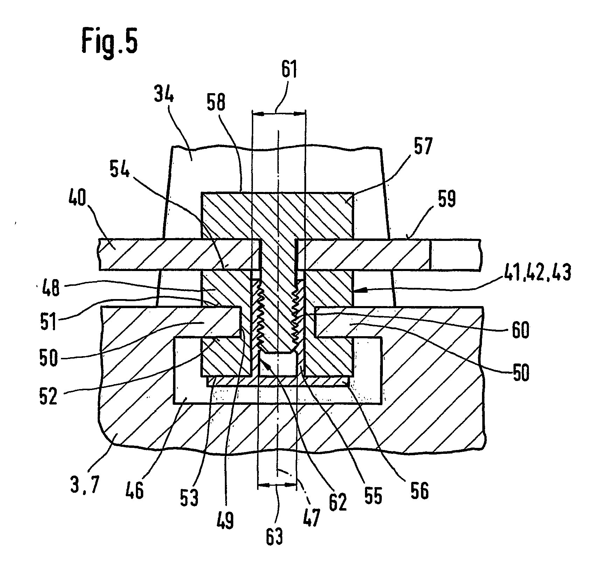

Im Unterschied zur in Figur 1 dargestellten Ausführungsvariante eines Wischerantriebs umfasst der Wischerdirektantrieb 30 gemäß der Darstellung in Figur 2a kein ungleichmäßig übersetzendes Wischergestänge 15. Vielmehr wirkt die von einem Antriebswellen-Dom 34 umschlossene Abtriebswelle 5 des Getriebes 3 des Wischerantriebs 1 unmittelbar auf die Wischerantriebswelle 14, an der wiederum drehfest der Wischarm 19 aufgenommen ist, welcher das Wischblatt 20 aufnimmt. Die Abtriebswelle 5 des Getriebes 3 und die Wischerantriebswelle 14 können auch als ein Bauteil ausgeführt sein. In der in Figur 2a wiedergegebenen Ausführungsvariante der erfindungsgemäß vorgeschlagenen Lösung ist am Wischermotor 2 das gleichmäßig übersetzende Getriebe 3 seitlich angeflanscht. Das Getriebegehäuse ist mit Bezugszeichen 7 gekennzeichnet; die Abtriebswelle des Wischermotors 2 ist durch das Bezugszeichen 4 identifiziert. Auf der Oberseite des Getriebegehäuses 7 des gleichmäßig übersetzenden Getriebes 3 befindet sich der Abtriebswellen-Dom 34, der die Abtriebswelle 5 des gleichmäßig übersetzenden Getriebes 3 umgibt. Der Oberseite des Getriebegehäuses 7 des gleichmäßig übersetzenden Getriebes 3 sind eine erste Anbindungsstelle 31, eine zweite Anbindungsstelle 32 und schließlich eine weitere, dritte Anbindungsstelle 33 zugeordnet, mit welchen der in Figur 2a dargestellte Wischerdirektantrieb unmittelbar an einer Fahrzeugkarosserie 24 aufgenommen werden kann, ohne dass es einer zusätzlichen Halterung (vgl. Halterung 11 gemäß Figur 1) bedürfte. Die erste Anbindungsstelle 31, die zweite Anbindungsstelle 32 sowie die dritte Anbindungsstelle 33 können mit Entkopplungselementen versehen werden, die eine Übertragung von Geräuschen bzw. Schwingungen des Wischerantriebs 1 an die Fahrzeugkarosserie 24 unterbinden. Die Entkopplungselemente sind der Darstellung gemäß Figur 5, Lage und Anordnung der Entkopplungselemente sind der Darstellung gemäß Figur 3 entnehmbar.

Figur 2b zeigt eine Draufsicht auf die in Figur 2a dargestellte erste Ausführungsvariante eines Wischerdirektantriebs.

Aus der Draufsicht gemäß Figur 2b geht hervor, dass das gleichmäßig übersetzende Getriebe 3 eine Montagefläche 35 umfasst, an der eine erste Anbindungsstelle 31, die zweite Anbindungsstelle 32 und die dritte Anbindungsstelle 33 ausgebildet sind. In der Mitte der Montagefläche 35, welche die Oberseite des Getriebekastens 5 des gleichmäßig übersetzenden Getriebes 3 darstellt, ist der Abtriebswellen-Dom 34 zu erkennen, welcher die Abtriebswelle des gleichmäßig übersetzenden Getriebes 3 umschließt, die mit einer (vgl. Darstellung gemäß Figur 2a) koaxial zu dieser aufgenommenen Wischerantriebswelle 14 fluchtet. Der in Figur 2b in der Draufsicht dargestellte Wischerantrieb 1 des Wischerdirektantriebs 30 kann in eine Fahrzeugkarosserie unmittelbar integriert werden, wenn in der Fahrzeugkarosserie 24 entsprechend der Lage der ersten Anbindungsstelle 31, der zweiten Anbindungsstelle 32 sowie der dritten Anbindungsstelle 33 entsprechende Öffnungen ausgebildet sind, in welche der Wischerantrieb 1 gemäß der Darstellung in Figur 2b einfach eingeschoben wird. Der Abtriebswellen-Dom 34 durchsetzt die Fahrzeugkarosserie 24 und es kann ein Verschrauben und eine Befestigung des Wischerantriebs 1 an der Fahrzeugkarosserie 24 mittels eines Standardwerkzeugs erfolgen.

Figur 3 ist die Darstellung einer weiteren Ausführungsvariante eines Wischerantriebs zu entnehmen, welcher ebenfalls einen Wischerdirektantrieb darstellt.

Im Unterschied zu dem in Figur 2a und Figur 2b dargestellten Ausführungsvarianten wird der Wischerdirektantrieb 30 gemäß der Figur 3 mittelbar über ein Halteblech 40 mit einer in Figur 3 nicht dargestellten Fahrzeugkarosserie 24 verbunden. Ähnlich zur in Figur 2a bzw. 2b dargestellten Ausführungsvariante eines Wischerdirektantriebs 30 befinden sich an der Oberseite des Getriebegehäuses 7 des gleichmäßig übersetzenden Getriebes 3 an der ersten Anbindungsstelle 31, der zweiten Anbindungsstelle 32 sowie an der dritten Anbindungsstelle 33 ein erstes Entkopplungselement 41, ein weiteres, zweites Entkopplungselement 45 sowie ein drittes Entkopplungselement 43. Mittels der Entkopplungselemente 41, 42, 43 erfolgt eine Anbindung des Wischerantriebs 1, einen Wischermotor 2 und ein gleichmäßig übersetzendes Getriebe 3 umfassend, an einem Halteblech 40. Das Halteblech 40 ist bereits an einer Fahrzeugkarosserie 24 aufgenommen und mit einem der Lage der Anbindungsstellen 31, 32, 33 an der Montagefläche 35 des Wischerantriebs 1 entsprechenden Lochbild versehen, so dass der Wischerantrieb 1 des Wischerdirektantriebs 30 an diesem befestigbar ist. Das Halteblech 40 kann in vorteilhafter Weise an die Geometrie der Fahrzeugkarosserie 24 bzw. den zur Aufnahme des Wischerantriebs 1 erforderlichen Einbauraum 25 angepasst werden.

An der Fahrzeugkarosserie oder am Halteblech 40, an dem der Wischerantrieb 1 eines des Wischerdirektantriebs 30 aufgenommen ist, sind keine separat vorzuhaltenden Entkopplungselemente zur Geräusch- bzw. Schwingungsdämpfung erforderlich. Die Entkopplungselemente (vgl. Darstellung gemäß Figur 5) werden allesamt bereits bei der Montage des Wischerantriebs 1, einen Wischermotor 2 und ein gleichmäßig übersetzendes Getriebe 3 umfassend, in deren Gehäusekomponenten wie z.B. das Getriebegehäuse 7 integriert.

Figur 4 zeigt eine Draufsicht auf die in Figur 3 dargestellte Ausführungsvariante eines Wischerdirektantriebs.

Der Darstellung in Fig. 4 ist die Geometrie des Halteblechs 40 entnehmbar. Das Halteblech 40 befindet sich in der Draufsicht gemäß Figur 4 oberhalb des Getriebegehäuses 7 des gleichmäßig übersetzenden Getriebes 3, welches seitlich am Wischermotor 2 des Wischerantriebs 1 angeflanscht ist. Die Abtriebswelle 4 des Wischermotors 2 wirkt auf die in der Draufsicht gemäß Figur 4 sich senkrecht zur Zeichenebene erstreckende Abtriebswelle 5 des gleichmäßig übersetzenden Getriebes 3. Die Abtriebswelle 5 des gleichmäßig übersetzenden Getriebes 3 ist von dem sich ebenfalls senkrecht zur Zeichenebene gemäß Figur 4 erstreckenden Abtriebswellen-Dom 34 umschlossen. Der auf der Oberseite des Getriebegehäuses 7 ausgebildete Antriebswellen-Dom 34 durchsetzt das Halteblech 40, und eine Öffnung 45, die im Haltblech 40 vorgesehen ist. Zwischen der Außenumfangsfläche des Abtriebswellen-Doms 34 und der Umrandung der Öffnung 45 ist eine Ringraum 44 ausgebildet, so dass kein Kontakt zwischen dem Halteblech 40 und dem Abtriebswellen-Dom 34, der die Abtriebswelle 5 umgibt, auftritt. Das Halteblech 40, welches mit einer Fahrzeugkarosserie in Verbindung steht, ist an einer ersten Anbindungsstelle 31, an einer zweiten Anbindungsstelle 32 sowie an einer dritten Anbindungsstelle 33, die jeweils ein Entkopplungselement 41, 42 bzw. 43 umfassen, mit dem Wischerantrieb 1 des Wischerdirektantriebs 30 verbunden, vgl. Darstellung der Entkopplungselemente 41, 42, 43 in Figur 5.

In einer Ausführungsvariante der erfindungsgemäß vorgeschlagenen Lösung kann seitlich am Gehäuse des Wischermotors 2 im Bereich des Poltopfendes 10 eine erste Anbindungsstelle 31 vorgesehen sein, an der ein erstes Entkopplungselement 41 angeordnet werden kann. Dieser gegenüber liegend, an einer Seitenfläche des Getriebegehäuses 7 des gleichmäßig übersetzenden Getriebes, kann eine zweite Anbindungsstelle 32 mit einem weiteren, zweiten Entkopplungselement 42 vorgesehen sein. Das dem Poltopfende 10 zugeordnete Entkopplungselement 41 wird entweder unmittelbar in der Fahrzeugkarosserie montiert oder an einer Motorhalterung (hier nicht dargestellt) montiert. Durch diese Ausführungsvariante wird in vorteilhafter Weise erreicht, dass die Verbindung des Wischermotors 2 an seinen Befestigungselementen, d.h. der ersten gestrichelt eingezeichneten Anbindungsstelle 31 sowie der zweiten, ebenfalls gestrichelt eingezeichneten Anbindungsstelle 32, möglichst weit entfernt von der Abtriebswelle 5 des gleichmäßig übersetzenden Getriebes 3 angeordnet sind, so dass höhere Kräfte, bzw. höhere Momente durch den Wischerantrieb 1 gemäß der Darstellung in Figur 4 aufgenommen bzw. übertragen werden können.

Der Darstellung gemäß Figur 5 ist ein Entkopplungselement zur Entkopplung eines Wischerantriebs 1 von einer Fahrzeugkarosserie bzw. einem mit diesem verbundenen Halteblech in vergrößertem Maßstab zu entnehmen.

Der Darstellung gemäß Figur 5 ist ein Ausschnitt eines Gehäuses 7 eines gleichmäßig übersetzenden Getriebes 3 zu entnehmen, wobei in diesem eine Ausnehmung 46 angeordnet ist. Oberhalb des Gehäuses 7 des gleichmäßig übersetzenden Getriebes 3 ist ein Teil des Haltebleches 40 dargestellt, welches mit einem Teil einer in Figur 5 nicht dargestellten Fahrzeugkarosserie verbunden werden kann. Ein erstes Entkopplungselement 41, ein zweites Entkopplungselement 42 sowie ein drittes Entkopplungselement 43 können gemäß der Darstellung in Figur 5 als Buchsen 48 ausgebildet werden. An der Außenumfangsfläche der Buchsen 48 ist eine umlaufende Ringnut 49 ausgebildet. In dieser umlaufenden Ringnut 49 der Buchsen 48 greift eine Ringfläche 50, welche die Ausnehmung 46 innerhalb des Getriebegehäuses 7 des Wischerantriebs 1 begrenzt, ein. Die Buchse 48 umfasst eine in die Ausnehmung 46 hinein ragende erste Stirnfläche 53 und eine dem Halteblech 40 zur Verbindung mit der Fahrzeugkarosserie 24 zuweisende zweite Stirnfläche 54. Die als Entkopplungselemente 41, 42, 43 einsetzbaren Buchsen 48, die aus einem Kunststoffmaterial oder einem schwingungsabsorbierenden Elastomer beschaffen sein können, sind mit einem ersten Befestigungselement 55 in Gestalt einer Gewindebuchse versehen. Die Gewindebuchse 55 umfasst einen Buchsenkopf 56, der im in Figur 5 dargestellten Zustand an der ersten Stirnfläche 53 der Buchse 48 innerhalb der Ausnehmung 46 anliegt. Die Gewindebuchse 55 weist darüber hinaus einen hülsenförmigen Ansatz auf, der von einer im Durchmesser 61 ausgebildeten Bohrungswandung der als Entkopplungselemente 41, 42, 43 eingesetzten Buchse 48 umschlossen ist. Der hülsenförmige Ansatz an der Gewindebuchse 55, der mit einem Innengewinde versehen ist, ist in einem Innendurchmesser 63 ausgebildet.

Die Gewindebuchse 45 wird vor der Montage der als Buchsen 48 ausbildbaren Entkopplungselemente 41, 42, 43 im Getriebegehäuse 7 in die Bohrung der Buchse 48 eingeschoben. Danach erfolgt die Montage der Buchse 48 an der Ringfläche 50 des Getriebegehäuses 7. Schließlich wird das Getriebegehäuse 7 des Wischerantriebs 1, welches in der Darstellung gemäß Figur 5 die Entkopplungselemente 41, 42, 43 aufnimmt, unterhalb des Halteblechs 40 positioniert. Durch Einfügen eines Befestigungselements 57, welches als eine Schraube ausgebildet sein kann, wird mittels eines Standardwerkzeugs eine Verbindung zwischen dem Befestigungselement 57 und der von der Buchse 48 umschlossenen Gewindebuchse 55 hergestellt. Nach Anziehen einer Schraubverbindung 60 liegt der Kopf 58 des Befestigungselements 57 auf einer Oberseite 59 des Halteblechs 40 auf. Durch die Schraubverbindung 60 sind die Gewindebuchse 55 und das Befestigungselement 57 kraftschlüssig gegeneinander verspannt, wodurch das Getriebegehäuse 7 des Wischerantriebs 1 an dem Halteblech 40 befestigt ist, welches seinerseits an einem in Figur 4 nicht dargestellten Karosserieteil einer Fahrzeugkarosserie aufgenommen ist.

In Figur 5 sind die Ausnehmungen 46 zur Aufnahme der Entkopplungselemente 41, 42, 43 an einem Getriebegehäuse 7 ausgebildet dargestellt. Die Entkopplungselemente 41, 42, 43 könnten jedoch ohne weiteres auch in das Gehäuse des Wischermotors eingelassen sein, ohne direkt mit dem Wischermotor in Kontakt zu treten. Durch das Verbinden des Wischerantriebs 1, der als der Wischerdirektantrieb 30 ausgeführt ist, entweder unmittelbar an der Fahrzeugkarosserie 24 oder am in Figur dargestellten Halteblech 40 erfolgt eine Anbindung des Wischerantriebs 1 an die Fahrzeugkarosserie oder an das Halteblech 40 derart, dass vom Wischerantrieb 1 ausgehende Geräusche bzw. Schwingungen nicht an die Fahrzeugkarosserie (vgl. Darstellung gemäß Figur 1) übertragen werden können. Werden die als Entkopplungselemente 41, 42, 43 eingesetzten Buchsen 48 aus einem Kunststoffmaterial bzw. einem Elastomer gefertigt, kann eine eng tolerierte Ringanlage 62 zwischen der Gewindebuchse 55 und der dieses aufnehmende Bohrung der Buchse 48 erreicht werden. Je nach Anzugsmoment, welches auf das Befestigungselement 57 aufgebracht werden kann, entsteht eine kraftschlüssige Verbindung zwischen Befestigungselement 57 und Gewindebuchse 55, welche die bevorzugt aus einem Elastomermaterial gefertigte Buchse 48, das Entkopplungselement 41 oder 42 oder 43 darstellend, in axialer Richtung vorspannt, so dass eine stabile Anbindung des Wischerantriebs 1 an der Fahrzeugkarosserie 24 erreichbar ist.

Mit der erfindungsgemäß vorgeschlagenen Ausbildung eines Wischerantriebs 1 lässt sich ein Wischerdirektantrieb 30 realisieren, bei dem die Wischerantriebswelle 14 unmittelbar mit der Abtriebswelle des gleichmäßig übersetzenden Getriebes 3 des Wischerantriebs 1 verbunden ist. Ein ungleichmäßig übersetzendes Getriebe 2 (Wischergestänge 15 gemäß der Darstellung in Figur 1) kann somit entfallen. Die Verbindung zwischen dem Wischerantrieb 1, einem Wischermotor 2 und ein in diesen integriertes gleichmäßig übersetzendes Getriebe 3 bzw. ein an diesem angeflanschtes gleichmäßig übersetzendes Getriebe 3, kann einerseits gemäß der Darstellungen in den Figuren 2a, 2b unmittelbar an einer Fahrzeugkarosserie 24 unterhalb einer Windschutzscheibe erfolgen. Andererseits kann dieser Antrieb 1 gemäß der vorgeschlagenen Lösung an einem an die Einbauraumverhältnisse angepassten Halteblech 40 montiert werden. Die Entkopplungselemente 41, 42, 43 sind in vorteilhafter Weise bereits in den Wischerantrieb 1 integriert, so dass fahrzeugherstellerseitig keine weiteren Entkopplungselemente vorzuhalten sind, sondern lediglich Anschraubflächen an der Fahrzeugkarosserie 24 bzw. an dem Halteblech 40 mit einem zur Aufnahme der Anbindungsstellen 31, 32, 33 geeigneten Lochbild zu versehen sind. Auf Seiten des Wischerantriebs 1, den Wischermotor 2 und ein gleichmäßig übersetzendes Getriebe 3 enthaltend können die Entkopplungselemente 41, 42, 43, die als eine aus Elastomermaterial gefertigte Buchse 48 ausgebildet sein können, sowohl in das Gehäuse des Wischermotors 2 als auch in das Gehäuse des diesem zugeordneten gleichmäßig übersetzenden Getriebes 3 integriert sein.

Mit der erfindungsgemäß vorgeschlagenen Lösung lässt sich einerseits eine Standardisierung der Anbindung eines Wischerantriebs 1 an eine Fahrzeugkarosserie 24 entweder unmittelbar an diese oder mittelbar über ein Halteblech 40 an diese realisieren. Durch eine Verwendung gleicher Entkopplungselemente 41, 42, 43 kann eine Reduzierung der Typenvielfalt erreicht werden. Es lässt sich insbesondere durch den Wegfall einer individuell konfigurierbaren Motorhalterung 11, vgl. Darstellung gemäß Figur 1, eine Teilereduktion einer Scheibenwischanlage erzielen, sei es zum Einsatz an Frontscheiben, sei es zum Einsatz an Heckscheiben von Fahrzeugen. Aufgrund des einheitlich konfigurierten Lochbildes hinsichtlich der Anbindungsstellen 31, 32 und 33, an denen jeweils ein Entkopplungselement 41, 42 bzw. 43 vorgesehen ist, lässt sich eine erheblich leichtere Montage des erfindungsgemäß vorgeschlagenen Wischerantriebs in der Fahrzeugendmontage erreichen. Der Wischerantrieb 1 wird in seiner Fügeposition vom Werker in einer Hand gehalten, während dieser mit der anderen Hand mittels eines Standardwerkzeugs (Schraubers) die Befestigungselemente 57 mit den in den Entkopplungselementen 41, 42, 43 bereits vormontierten Gewindebuchsen 54 verschraubt.

Hinsichtlich der Fertigung der erfindungsgemäß vorgeschlagenen Wischerantriebe 1 können die Entkopplungselemente 41, 42, 43 und die von diesen umschlossenen Befestigungselemente 55 schon innerhalb der Montage fest am Gehäuse des gleichmäßig übersetzenden Getriebes 3 bzw. des Wischermotors 2 verbunden werden, so dass sich eine Reduzierung von vorzuhaltenden Einzelteilen bei Lieferung bzw. Montage eines derart beschaffenen Wischerantriebs 1, der auch als Wischerdirektantrieb 30 einsetzbar ist, erreichen lässt.

### Bezugszeichenliste

- 1: Wischerantrieb
- 2: Wischermotor
- 3: gleichmäßig übersetzendes Getriebe
- 4: Abtriebsachse Wischermotor
- 5: Abtriebswelle Getriebe 3
- 6: Winkel
- 7: Getriebegehäuse
- 8: erste Verbindungsstelle
- 9: zweite Verbindungsstelle
- 10: Poltopfende
- 11: Halterung
- 12: Öffnung für Abtriebswelle Getriebe 3
- 13: Lagerung für Wischerantriebswelle
- 14: Wischerantriebswelle
- 15: Wischgestänge
- 16: Antriebskurbel
- 17: Koppelstange
- 18: Abtriebskurbel
- 19: Wischarm
- 20: Wischblatt
- 21: erste Kröpfung Halterung 11
- 22: zweite Kröpfung Halterung 11
- 23: Aufnahmeelement
- 24: Fahrzeugkarosserie
- 25: Ausnehmung für Wischerantrieb

- 30: Wischerdirektantrieb
- 31: erste Anbindungsstelle
- 32: zweite Anbindungsstelle
- 33: dritte Anbindungsstelle
- 34: Abtriebswellen-Dom
- 35: Montagefläche

- 40: Halteblech
- 41: erstes Entkopplungselement
- 42: zweites Entkopplungselement
- 43: drittes Entkopplungselement
- 44: Ringraum
- 45: Öffnung Abtriebswelle
- 46: Ausnehmung Getriebegehäuse 7
- 47: Symmetrieachse
- 48: Buchse
- 49: Ringnut
- 50: Ringfläche
- 51: erste Anlagefläche
- 52: zweite Anlagefläche
- 53: erste Stirnfläche
- 54: zweite Stirnfläche
- 55: Gewindebuchse
- 56: Gewindebuchsenkopf
- 57: Befestigungselement (Schraube)
- 58: Schraubenkopf
- 59: Oberseite Ringfläche 50
- 60: Schraubverbindung
- 61: Durchmesser Bohrung von Buchse 48
- 62: Ringanlage
- 63: Innendurchmesser Gewindebuchse

## Patentansprüche

1. Wischanlage mit einem Wischerantrieb (1), der einen Wischmotor (2) und ein Getriebe (3) umfasst, über dessen Abtriebswelle (5) eine Wischarmantriebswelle (14) eines Wischarms (19) antreibbar ist und an Gehäusebereichen (7) des Wischantriebs (1) Anbindungsstellen (31, 32, 33) zur Aufnahme an einer Fläche (24, 40) angeordnet sind, wobei die Anbindungsstellen (31, 32, 33) des Wischerantriebs (1) jeweils ein Entkopplungselement (41, 42, 43) aufweisen, an welchem Befestigungselemente (55) zur Montage des Wischerantriebs (1) entweder an einer Fahrzeugkarosserie (24) oder an einer Anschraubfläche (40) aufgenommen sind, **dadurch gekennzeichnet, dass** am Poltopfende (10) des Wischermotors (2) eine erste Anbindungsstelle (31) und am Getriebegehäuse (7) des Getriebes (3) eine weitere Anbindungsstelle (32) ausgeführt sind, über welche der Wischerantrieb (21) in Entkopplungselementen (41, 42) an der Fahrzeugkarosserie (24) mittelbar oder unmittelbar aufnehmbar ist.

2. Wischanlage gemäß Anspruch 1, **dadurch gekennzeichnet, dass** die Entkopplungselemente (41, 42, 43) in Ringflächen (50) eingelassen sind, die Ausnehmungen (46) im Gehäusebereich (7) des Wischermotors (2) oder des Getriebes (3) begrenzen.

3. Wischanlage gemäß Anspruch 1, **dadurch gekennzeichnet, dass** die Entkopplungselemente (41, 42, 43) eine Aufnahmeöffnung für ein Befestigungselement (55) aufweisen.

4. Wischanlage gemäß Anspruch 1, **dadurch gekennzeichnet, dass** die Entkopplungselemente (41, 42, 43) als rotationssymmetrische Einsätze (48) ausgebildet sind und an ihrer Umfangsfläche eine ringförmige Ausnehmung (49) aufweisen.

5. Wischanlage gemäß Anspruch 4, **dadurch gekennzeichnet, dass** die Entkopplungselemente (41, 42, 43) als Buchsen (48) ausgeführt sind.

6. Wischanlage gemäß Anspruch 3, **dadurch gekennzeichnet, dass** das Befestigungselement (55) in Anlage (62) im Entkopplungselement (41, 42, 43) gehalten ist.

7. Wischanlage gemäß Anspruch 4, **dadurch gekennzeichnet, dass** die rotationssymmetrischen Einsätze (48) ein verformbares Kunststoffmaterial enthalten.

8. Wischanlage gemäß Anspruch 4, **dadurch gekennzeichnet, dass** die rotationssymmetrischen Einsätze (48) aus einem Elastomermaterial gefertigt sind.

9. Wischanlage gemäß Anspruch 1, **dadurch gekennzeichnet, dass** die Anbindungsstellen (31, 32, 33) des Wischerantriebs (1) auf einer Montagefläche (35) eines Getriebegehäuses (7) angeordnet sind und jeweils ein Entkopplungselement (41, 42, 43) umfassen.

10. Wischanlage gemäß Anspruch 9, **dadurch gekennzeichnet, dass** an der Montagefläche (35) eine die Abtriebswelle (5) umschließende Erhebung (34) ausgebildet ist, welche eine Fahrzeugkarosserie (24) oder eine Anschlagfläche (4) durchsetzt.

11. Wischanlage gemäß der Ansprüche 1, 9 und 10, **dadurch gekennzeichnet, dass** die Anschraubfläche (40) eine Öffnung (45) aufweist, durch welche sich die die Abtriebswelle (5) umschließende Erhebung (34) am Getriebe (3) des Wischerantriebs (1) berührungsfrei durch die Anschraubfläche (40) erstreckt.

12. Wischanlage gemäß Anspruch 1, **dadurch gekennzeichnet, dass** der Wischerantrieb (1) als Wischerdirektantrieb (30) ausgeführt ist, bei dem die Abtriebswelle (5) des Getriebes (3) direkt mit der Wischarmantriebswelle (14) verbunden ist.

13. Wischanlage gemäß Anspruch 1, **dadurch gekennzeichnet, dass** in der Fahrzeugkarosserie (24) der Anordnung der mit Entkopplungselementen (41, 42, 43) versehenen Anbindungsstellen (31, 32, 33) entsprechende Öffnungen angeordnet sind.

14. Wischanlage gemäß Anspruch 1, **dadurch gekennzeichnet, dass** in der Anschraubfläche (40), die mit der Fahrzeugkarosserie (24) verbunden ist, zur Anordnung der mit Entkopplungselementen (41, 42, 43) versehenen Anbindungsstellen (31, 32, 33) entsprechende Öffnungen ausgebildet sind.

15. Wischanlage gemäß Anspruch 1, **dadurch gekennzeichnet, dass** das der ersten Anbindungsstelle (31) zugeordnete Entkopplungselement (41) sowohl an der Fahrzeugkarosserie (24) als auch am Wischerantrieb (1) vormontierbar ist.

16. Wischanlage gemäß Anspruch 1, **dadurch gekennzeichnet, dass** das Befestigungselement (55) als Gewindebuchse ausgeführt ist.

## Claims

1. Wiper arrangement with a wiper drive (1) comprising a wiper motor (2) and a gearbox (3), via the output drive shaft (5) of which a wiper arm drive shaft (14) for a wiper arm (19) is capable of being driven, and connection points (31, 32, 33) for location on a surface (24, 40) are arranged in areas of the housing (7) of the wiper drive (1), in conjunction with which the connection points (31, 32, 33) of the wiper drive (1) in each case exhibit a disconnection element (41, 42, 43), on which securing elements (55) for the installation of the wiper drive (1) either on a vehicle body (24) or on a screwed attachment surface (40) are accommodated, **characterized in that** a first connection point (31) is executed at the mounting end (10) of the wiper motor (2) and a further connection point (32) is executed on the gear housing (7) of the gearbox (3), via which the wiper drive (21) is capable of being accommodated directly or indirectly in disconnection elements (41, 42) on the vehicle body (24).

2. Wiper arrangement according to Claim 1, **characterized in that** the disconnection elements (41, 42, 43) are let into annular surfaces (50), which delimit recesses (46) in the area of the housing (7) of the wiper motor (2) or the gearbox (3).

3. Wiper arrangement according to Claim 1, **characterized in that** the disconnection elements (41, 42, 43) exhibit an accommodating opening for a securing element (55).

4. Wiper arrangement according to Claim 1, **characterized in that** the disconnection elements (41, 42, 43) are executed as rotationally symmetrical inserts (48) and exhibit an annular recess (49) on their peripheral surface.

5. Wiper arrangement according to Claim 4, **characterized in that** the disconnection elements (41, 42, 43) are executed as bushes (48).

6. Wiper arrangement according to Claim 3, **characterized in that** the securing element (55) is retained in the arrangement (62) in the disconnection element (41, 42, 43).

7. Wiper arrangement according to Claim 4, **characterized in that** the rotationally symmetrical inserts (48) contain a deformable plastic material.

8. Wiper arrangement according to Claim 4, **characterized in that** the rotationally symmetrical inserts (48) are produced from an elastomer material.

9. Wiper arrangement according to Claim 1, **characterized in that** the connection points (31, 32, 33) of the wiper drive (1) are arranged on a mounting surface (35) for a gear housing (7) and in each case comprise a disconnection element (41, 42, 43).

10. Wiper arrangement according to Claim 9, **characterized in that** a raised structure (34) enclosing the output drive shaft (5) is formed on the mounting surface (35), which raised structure passes through a vehicle body (24) or a stop surface (4).

11. Wiper arrangement according to Claims 1, 9 and 10, **characterized in that** the screw attachment surface (40) exhibits an opening (45), via which the raised structure (34) enclosing the output drive shaft (5) on the gearbox (3) of the wiper drive (1) extends without direct contact through the screw attachment surface (40).

12. Wiper arrangement according to Claim 1, **characterized in that** the wiper drive (1) is executed as a wiper direct drive (30), in which the output drive shaft (5) of the gearbox (3) is directly attached to the wiper arm drive shaft (14).

13. Wiper arrangement according to Claim 1, **characterized in that** corresponding openings for the arrangement of the connection points (31, 32, 33) provided with disconnection elements (41, 42, 43) are arranged in the vehicle body (24).

14. Wiper arrangement according to Claim 1, **characterized in that** corresponding openings for the arrangement of the connection points (31, 32, 33) provided with disconnection elements (41, 42, 43) are arranged in the screw attachment surface (40), which is connected to the vehicle body (24).

15. Wiper arrangement according to Claim 1, **characterized in that** the disconnection element (41) allocated to the first connection point (31) is capable of pre-assembly both to the vehicle body (24) and to the wiper drive (1).

16. Wiper arrangement according to Claim 1, **characterized in that** the securing element (55) is executed as a threaded bush.

## Revendications

1. Installation d'essuie-glace comportant un entraînement (1) formé d'un moteur d'essuie-glace (2) et d'une transmission (3) dont l'arbre de sortie (5) entraîne un arbre d'entraînement (14) d'un bras d'essuie-glace (19) et des parties de boîtier (7) de l'entraînement d'essuie-glace (1) comportent des points de fixation (31, 32, 33) pour être reçus sur une surface (24, 40),
les points de fixation (31, 32, 33) de l'entraînement (1) de l'essuie-glace ayant chacun un élément de découplage (41, 42, 43) avec des éléments de fixation (55) pour le montage de l'entraînement d'essuie-glace (1) soit à la carrosserie (24) du véhicule soit à une surface de vissage (40),
**caractérisée en ce que**
l'extrémité du pot polaire (10) du moteur d'essuie-glace (2) comporte un premier point de fixation (31) et le boîtier (7) de la transmission (3) comporte un autre point de fixation (32), point qui reçoit directement ou indirectement l'entraînement d'essuie-glace (21) dans des éléments de découplage (41, 42) de la carrosserie (24) du véhicule.

2. Installation d'essuie-glace selon la revendication 1,
**caractérisée en ce que**
les éléments de découplage (41, 42, 43) sont logés dans des surfaces annulaires (50) délimitant les cavités (46) de la zone de boîtier (7) du moteur d'essuie-glace (2) ou de la transmission (3).

3. Installation d'essuie-glace selon la revendication 1,
**caractérisée en ce que**
les éléments de découplage (41, 42, 43) ont un orifice de réception pour un élément de fixation (55).

4. Installation d'essuie-glace selon la revendication 1,
**caractérisée en ce que**
les éléments de découplage (41, 42, 43) sont réalisés sous la forme d'inserts (48) symétriques en rotation et leur surface périphérique comporte une cavité annulaire (49).

5. Installation d'essuie-glace selon la revendication 4,
**caractérisée en ce que**
les éléments de découplage (41, 42, 43) sont en forme de douilles (48).

6. Installation d'essuie-glace selon la revendication 3,
**caractérisée en ce que**
l'élément de fixation (55) est tenu dans un élément de découplage (41, 42, 43) dans l'appui (62).

7. Installation d'essuie-glace selon la revendication 4,
**caractérisée en ce que**
les inserts (48) symétriques en rotation comportent une matière plastique déformable.

8. Installation d'essuie-glace selon la revendication 4,
**caractérisée en ce que**
les inserts (48) symétriques en rotation sont fabriqués en un élastomère.

9. Installation d'essuie-glace selon la revendication 1,
**caractérisée en ce que**
les points de fixation (31, 32, 33) de l'entraînement (1) de l'essuie-glace sont prévus sur une surface de montage (35) d'un boîtier de transmission (7) et comportent chaque fois un élément de découplage (41, 42, 43).

10. Installation d'essuie-glace selon la revendication 9,
**caractérisée en ce que**
la surface de montage (35) comporte un bossage (34) entourant l'arbre de sortie (5) traversant la carrosserie (24) du véhicule ou une surface de fixation (4).

11. Installation d'essuie-glace selon les revendications 1, 9 et 10,
**caractérisée en ce que**
la surface de vissage (40) comporte une ouverture (45) traversée par le bossage (34) entourant l'arbre de sortie (5) de la transmission (3) de l'entraînement (1) de l'essuie-glace, en passant sans contact à travers la surface de vissage (40).

12. Installation d'essuie-glace selon la revendication 1,
**caractérisée en ce que**
l'entraînement d'essuie-glace (1) est réalisé sous la forme d'un entraînement direct d'essuie-glace (30) dont l'arbre de sortie (5) de la transmission (3) est relié directement à l'arbre d'entraînement (14) du bras d'essuie-glace.

13. Installation d'essuie-glace selon la revendication 1,
**caractérisée en ce que**
la carrosserie (24) du véhicule comporte des ouvertures correspondant à la disposition des points de fixation (31, 32, 33) munis des éléments de découplage (41, 42, 43).

14. Installation d'essuie-glace selon la revendication 1,
**caractérisée en ce que**
la surface de vissage (40) reliée à la carrosserie (24) comporte des ouvertures correspondant à la disposition des points de fixation (31, 32, 33) munis des éléments de découplage (41, 42, 43).

15. Installation d'essuie-glace selon la revendication 1,
**caractérisée en ce que**
l'élément de découplage (41) associé au premier point de fixation (31) est préassemblé à la fois à la carrosserie (24) du véhicule et à l'entraînement d'essuie-glace (1).

16. Installation d'essuie-glace selon la revendication 1,
**caractérisée en ce que**
l'élément de fixation (55) est une douille filetée.
